# EUROPÄISCHE PATENTSCHRIFT

(11) **EP 1 795 725 B1**
(45) Veröffentlichungstag und Bekanntmachung des Hinweises auf die Patenterteilung: **19.01.2011**
(21) Anmeldenummer: 06120368.3
(22) Anmeldetag: 08.09.2006
(51) Int. Cl.: F02C 7/18, F01D 25/12

(54) **Gasturbine mit geregelter Luftkühlung**
Gas turbine with controlled air cooling
Turbine à gaz avec réglage de l'air de refroidissement

(30) Priorität: 12.10.2005 CH 16572005
(43) Veröffentlichungstag der Anmeldung: 13.06.2007
(73) Patentinhaber: Alstom Technology Ltd, 5400 Baden (CH)
(72) Erfinder: Olmes, Sven, 5210 Windisch (CH); Reiter, Wilhelm, 79790, Küssaberg (DE); Zierer, Thomas, 5408, Ennetbaden (CH)

(56) Entgegenhaltungen:
- US-A- 2 487 842
- US-A- 2 970 437
- US-A- 5 392 614
- US-A- 5 414 992
- US-A- 5 577 378

## Beschreibung

### TECHNISCHES GEBIET

Die vorliegende Erfindung bezieht sich auf das Gebiet der Gasturbinen. Sie betrifft eine Gasturbine mit Kühlluftkühlung gemäss dem Oberbegriff des Anspruchs 1.

### STAND DER TECHNIK

Aus dem Stand der Technik sind Gasturbinen bekannt (Field experience with the sequential combustion system of the GT24/GT26 gas turbine family, ABB Review 5/1998, p. 12 ff.), bei denen die für die Turbine benötigte Kühlluft in einem MBH30-System durch externe Kühlluftleitungen vom Kompressor in einen separaten Kühlluftkühler geführt, dort rückgekühlt und danach der Turbine zur Verfügung gestellt wird. Als MBH30-System wird dabei ein Sekundärluftsystem der Gasturbinen GT24/GT26 bezeichnet, bei dem vom Verdichter nach der Stufe 16 abgezweigte Luft, die ungefähr 20 bar Druck aufweist, zur Kühlung von Turbinenkomponenten (hauptsächlich Schaufeln) verwendet wird. Die im Kühlluftkühler ausgetauschte Wärme wird innerhalb eines mit der Gasturbine ausgerüsteten Kombikraftwerks dem Kombiprozess und dem nachgeschalteten Dampfkreislauf weitergegeben.

Eine solche bekannte Gasturbine ist in schematisierter Form in Fig. 1 dargestellt (siehe auch die US-A-5,577,378). Die Gasturbine 10 der Fig. 1 umfasst einen Kompressor 11 zur Verdichtung der Verbrennungsluft und Abgabe der verdichteten Verbrennungsluft in eine Plenum12, eine auf den Kompressor 11 folgende erste Brennkammer 13, in welcher ein Brennstoff unter Zufuhr von verdichteter Verbrennungsluft verbrannt wird, eine erste Turbine 14, in welcher die heissen Verbrennungsgase aus der ersten Brennkammer 13 unter Arbeitsleistung entspannt werden, eine zweite Brennkammer 15 und eine zweite, der zweiten Brennkammer 15 nachgeschaltete Turbine 16. Ein Teil der verdichteten Verbrennungsluft wird vom Plenum 12 mittels einer Kühlluftleitung 17 abgezweigt, in einem Kühlluftkühler 18 abgekühlt und zur Kühlung der Gasturbine eingesetzt.

Aus Sicherheits- und Betriebsgründen (für besondere Betriebsbedingungen) ist in der Auslegung des Kühlsystems eine Druckreserve vorgesehen. Mittels einer Drosselvorrichtung 19 in Form von Blenden in der Kühlluftleitung 17 wird der Druck auf den in der Turbine benötigten Zieldruck (Kühlluftdruck p_{cool}) zurückgedrosselt. Zu hoher Druck im Turbinenkühlsystem hätte einen unnötig hohen Kühlluftverbrauch zur Folge. Die Drosselung wird in der Inbetriebnahme überprüft und gegebenenfalls auf die Maschine eingestellt (durch passende Wahl der Blenden). Mit der Drosselung geht allerdings Exergie verloren, die sonst in einer Expansion genutzt werden könnte.

Aus der Druckschrift US-A-2,970,437 ist eine Flugzeugturbine bekannt, deren Verdichter Druckluft entnommen, in ein oder zwei Stufen abgekühlt, in einer separaten, steuerbaren Radialturbine entspannt und anschliessend zur Kühlung von kritischen Komponenten im Flugzeug verwendet wird. Nach erfolgter Kühlung wird die Luft als Verbrennungsluft dem Eingang der Flugzeugturbine zugeführt, kann aber auch zum Herunterkühlen der verdichteten Kühlluft verwendet werden. Die Radialturbine treibt die Brennstoffpumpe für die Flugzeugturbine an und wird zur Regelung der Brennstoffzufuhr gesteuert.

Die Druckschrift US-A-5,414,992 offenbart eine Flugzeugturbine, bei der dem Verdichter entnommene Luft durch einen Kühler geschickt, dann in einer Hilfsturbine entspannt und anschliessend zur Kühlung des Flugzeugs oder der Maschine ("components of the vehicle or engine") herangezogen wird. Die Hilfsturbine treibt beispielsweise einen Hilfskompressor an. Eine Regelung des Drucks durch eine steuerbare Hilfsturbine ist nicht offenbart.

Die Druckschrift US-A-5,392,614 offenbart eine vergleichbare Flugzeugturbine mit einem Hilfs-Turbokompressor, durch den vom Verdichter abgezweigte Kühlluft geschickt und anschliessend zur Kühlung des Triebwerks verwendet wird. In einer Variante wird die Kühlluft nach dem Entspannen im Hilfs-Turbokompressor durch einen Kühler geschickt. Auch hier ist eine Regelung des Drucks durch eine steuerbare Hilfsturbine nicht offenbart.

Die Druckschrift US-A-2,487,842 offenbart eine Flugzeugturbine, bei der dem Verdichter entnommene Luft durch einen Kühler geschickt, dann in einer Hilfsturbine entspannt, anschliessend zur Kühlung des Schmiermittels verwendet und schliesslich in die Umgebung abgelassen wird.

### DARSTELLUNG DER ERFINDUNG

Es ist daher Aufgabe der Erfindung, eine Gasturbine mit Kühlluftkühlung zu schaffen, bei welcher die Drosselung der Kühlluft auf flexibel einstellbare Weise für die Gasturbine nutzbar gemacht wird.

Die Aufgabe wird durch die Gesamtheit der Merkmale des Anspruchs 1 gelöst. Wesentlich für die Erfindung ist, dass die Mittel zur Druckreduktion eine zweite Turbine umfassen. Die Erfindungsidee nutzt die durch die Drosselung normalerweise dissipierte Exergie in "Re-Heat"-Maschinen. Dabei ist die zweite Turbine steuerbar. Durch den Einsatz der steuer- bzw. regelbaren Turbine im Rohrleitungssystem kann ein Teil der "Drosselenergie" zurückgewonnen werden. Zudem kann diese Turbine durch eine Leitschaufelverstellung auf die von Maschine zu Maschine unterschiedlichen Bedürfnisse hinsichtlich Kühlluftdruck eingestellt bzw. elektronisch geregelt werden. Dazu ist eine Regeleinrichtung vorgesehen, welche durch Steuerung der zweiten Turbine den Kühlluftdruck regelt.

Die zweite Turbine ist vorzugsweise vor dem Kühlluftkühler angeordnet.

Eine Weiterbildung zeichnet sich dadurch aus, dass die zweite Turbine einen Generator antreibt. Die gewonnene Wellenleistung der zweiten Turbine kann mittels des Generators in das Stromnetz eingespiesen werden und daher den Gesamtwirkungsgrad der Anlage steigern.

Eine andere Weiterbildung zeichnet sich dadurch aus, dass als Brennstoff ein Gas verwendet wird, und dass die zweite Turbine einen Gaskompressor zur Verdichtung des Brennstoffs antreibt. Speziell die eingangs genannte GT24/26 benötigt hohe Drücke im Brennstoffsystem (ca. 50bar). In den Zuleitungen aus dem Gasnetz herrschen üblicherweise kleinere Drücke, was dazu führt, dass in der Regel ein Gaskompressor zur Ausstattung der Gasturbine gehört, der von einem Elektromotor angetrieben wird. Der Kompressor benötigt je nach Ausgangsdruckniveau bis zu 3MW Antriebsleistung. Ein Teil der Antriebsleistung könnte von der zweiten (Kühlluft-)Turbine geliefert werden. Mittels einer Überholkupplung könnte die Kühlluftturbine an den E-Motor des Kompressors angekuppelt werden, der E-Motor würde dann automatisch die noch fehlende Leistung liefern.

Als weitere Alternative könnte die gewonnene Wellenleistung auch wieder an anderer Stelle dissipiert werden und damit der Brennstoff erwärmt werden (ähnlich einer Wasserbremse in Versuchsturbinen). Dies geschieht, wenn gemäss einer anderen Weiterbildung die zweite Turbine eine Brennstoff-Vorwärmeinrichtung antreibt, in welcher der Brennstoff durch Umwandlung kinetischer Energie in Wärme erwärmt wird. Vorzugsweise würde dies mit flüssigem Brennstoff gemacht werden, wegen der einfacheren technischen Lösung. Damit würde die "Drosselenergie" vorteilhaft genutzt und dem höchsten Energieniveau im Kreisprozess zugeführt werden, was zu einer "optimalen" Ausbeute hinsichtlich Leistung und Wirkungsgrad führen würde, und besser wäre, als Wärmeenergie in den Dampfkreislauf zu verschieben.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einer schematisierten Darstellung eine Gasturbine mit Kühlluftkühlung nach dem Stand der Technik;
- Fig. 2: in einer zu Fig. 1 vergleichbaren Darstellung ein erstes Ausführungsbeispiel einer Gasturbine nach der Erfindung mit einer zusätzlichen Turbine in der Kühlluftleitung, die einen Generator antreibt;
- Fig. 3: in einer zu Fig. 1 vergleichbaren Darstellung ein zweites Ausführungsbeispiel einer Gasturbine nach der Erfindung mit einer zusätzlichen Turbine in der Kühlluftleitung, die einen Brennstoff- Kompressor antreibt; und
- Fig. 4: in einer zu Fig. 1 vergleichbaren Darstellung ein drittes Ausführungsbeispiel einer Gasturbine nach der Erfindung mit einer zusätzlichen Turbine in der Kühlluftleitung, die eine Brennstoff- Vorwärmeinrichtung antreibt.

### WEGE ZUR AUSFÜHRUNG DER ERFINDUNG

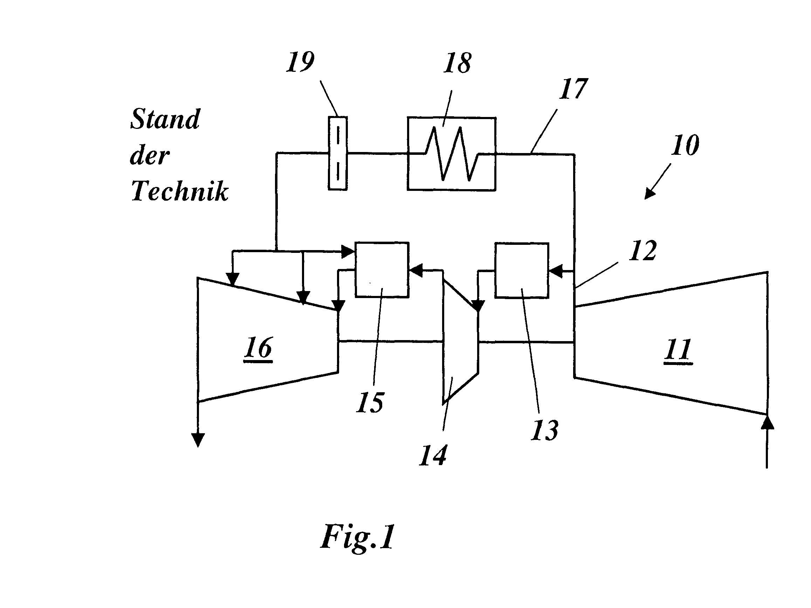

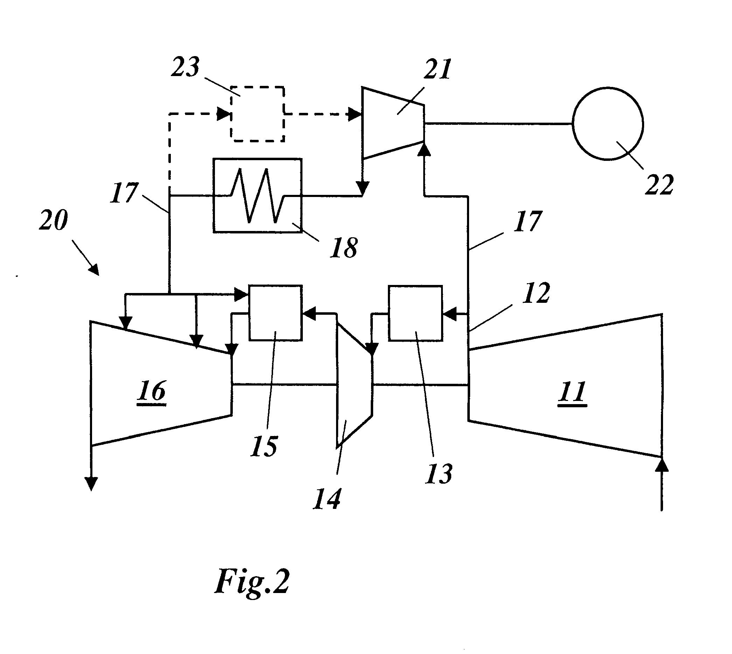

In Fig. 2 ist in einer zu Fig. 1 vergleichbaren Darstellung ein erstes Ausführungsbeispiel einer Gasturbine 20 nach der Erfindung wiedergegeben, bei welcher die durch Drosselung anfallende Exergie im Prozess genutzt wird. Hierzu ist in der Kühlluftleitung 17 eine zusätzliche regelbare Turbine 21 angeordnet, deren Wellenleistung weiterverwendet wird. Die Kühlluft wird in der Turbine 21 auf den gewünschten Kühlluftdruck entspannt, der durch eine Regelungseinrichtung 23 auf diesen Wert eingeregelt werden kann. Die Turbine 21 treibt einen Generator G an, dessen elektrische Energie insbesondere in das Stromnetz eingespiesen werden kann, wenn die Gasturbine in einem Kraftwerk arbeitet.

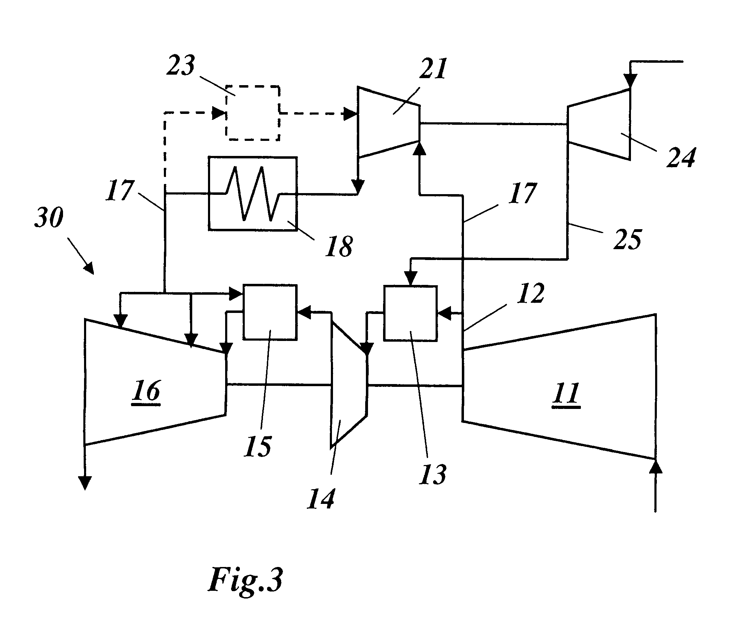

In Fig. 3 ist in einer zu Fig. 1 vergleichbaren Darstellung ein zweites Ausführungsbeispiel einer Gasturbine 30 nach der Erfindung dargestellt, bei welcher die zusätzliche Turbine 21 in der Kühlluftleitung 17 einen Gaskompressor 24 antreibt, der gasförmigen Brennstoff für die Brennkammer 13 verdichtet. Hierdurch kann die Exergie für die notwendige Kompression des gasförmigen Brennstoffs genutzt werden.

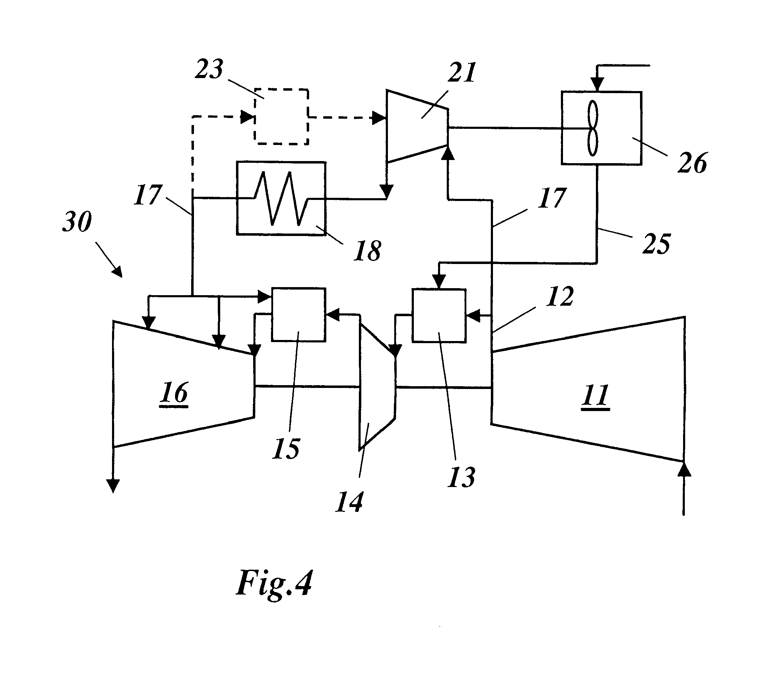

In Fig. 4 ist in einer zu Fig. 1 vergleichbaren Darstellung ein drittes Ausführungsbeispiel einer Gasturbine 30 nach der Erfindung wiedergegeben, bei der die zusätzliche Turbine in der Kühlluftleitung eine Brennstoff-Vorwärmeinrichtung 26 antreibt, die in der Brennstoffleitung 25 zur Brennkammer 13 angeordnet ist. Die Wellenleistung der Turbine 21 wird dabei in Wärmeleistung umgewandelt, die den vorzugsweise flüssigen Brennstoff erwärmt und so den Wirkungsgrad der Gasturbine verbessert.

### BEZUGSZEICHENLISTE

- 10,20,30: Gasturbine
- 11: Kompressor
- 12: Plenum
- 13,15: Brennkammer
- 14,16: Turbine
- 17: Kühlluftleitung
- 18: Kühlluftkühler
- 19: Drosselvorrichtung (Blende)
- 21: Turbine
- 22: Generator
- 23: Regeleinrichtung
- 24: Gaskompressor
- 25: Brennstoffleitung
- 26: Brennstoff-Vorwärmeinrichtung

## Patentansprüche

1. Gasturbine (20, 30) mit einem Kompressor (11) zur Verdichtung der Verbrennungsluft, wenigstens einer Brennkammer (13, 15), in welcher ein Brennstoff unter Zufuhr von verdichteter Verbrennungsluft verbrannt wird, und wenigstens einer der Brennkammer (13, 15) nachgeschalteten ersten Turbine (14, 16), in welcher die heissen Verbrennungsgase aus der Brennkammer (13, 15) unter Arbeitsleistung entspannt werden, wobei ein Teil der verdichteten Verbrennungsluft abgezweigt, in einem Kühlluftkühler (18) abgekühlt, durch Mittel zur Druckreduktion (21) auf einen tiefer liegenden Kühlluftdruck gebracht und der Gasturbine (20, 30) zu Kühlungszwecken zugeführt wird, welche eine zweite Turbine (21) umfassen, die steuerbar ist, **dadurch gekennzeichnet, dass** eine Regeleinrichtung (23) vorgesehen ist, welche durch Steuerung der zweiten Turbine (21)den Kühlluftdruck regelt.

2. Gasturbine nach Anspruch 1, **dadurch gekennzeichnet, dass** die zweite Turbine (21) vor dem Kühlluftkühler (18) angeordnet ist.

3. Gasturbine nachAnspruch 1 oder 2, **dadurch gekennzeichnet, dass** die zweite Turbine (21) einen Generator (22) antreibt.

4. Gasturbine nach einem der Ansprüche 1 bis 3, **dadurch gekennzeichnet, dass** als Brennstoff ein Gas verwendet wird, und dass die zweite Turbine (21) einen Gaskompressor (24) zur Verdichtung des Brennstoffs antreibt.

5. Gasturbine nach einem der Ansprüche 1 bis 4, **dadurch gekennzeichnet, dass** die zweite Turbine (21) eine Brennstoff-Vorwärmeinrichtung (26) antreibt, in welcher der Brennstoff durch Umwandlung kinetischer Energie in Wärme erwärmt wird.

6. Gasturbine nach Anspruch 5, **dadurch gekennzeichnet, dass** der Brennstoff ein flüssiger Brennstoff ist.

7. Gasturbine nach einem der Ansprüche 1 bis 6, **dadurch gekennzeichnet, dass** die Gasturbine (20, 30) mit einer zweistufigen Verbrennung ausgestattet ist und zwei Brennkammern (13, 15) und eine dritte Turbine (16, 14) umfasst.

## Claims

1. Gas turbine (20, 30) with a compressor (11) for compressing the combustion air, at least one combustion chamber (13, 15), in which a fuel is burned while compressed combustion air is supplied, and at least one first turbine (14, 16), which is arranged downstream of the combustion chamber (13, 15) and in which the hot combustion gases from the combustion chamber (13, 15) are expanded to perform work, part of the compressed combustion air being branched off, cooled in a cooling air cooler (18), brought to a lower cooling air pressure by means for obtaining a pressure reduction (21) and supplied to the gas turbine (20, 30) for cooling purposes, the means comprising a second turbine (21) which is controllable, **characterized in that** a regulating device (23), which regulates the cooling air pressure by controlling the second turbine (21), is provided.

2. Gas turbine according to Claim 1, **characterized in that** the second turbine (21) is arranged upstream of the cooling air cooler (18).

3. Gas turbine according to Claim 1 or 2, **characterized in that** the second turbine (21) drives a generator (22).

4. Gas turbine according to one of Claims 1 to 3, **characterized in that** a gas is used as the fuel, and **in that** the second turbine (21) drives a gas compressor (24) for compressing the fuel.

5. Gas turbine according to one of Claims 1 to 4, **characterized in that** the second turbine (21) drives a fuel preheating device (26), in which the fuel is heated by conversion of kinetic energy into heat.

6. Gas turbine according to Claim 5, **characterized in that** the fuel is a liquid fuel.

7. Gas turbine according to one of Claims 1 to 6, **characterized in that** the gas turbine (20, 30) is equipped with a two-stage combustion and comprises two combustion chambers (13, 15) and a third turbine (16, 14).

## Revendications

1. Turbine à gaz (20, 30) avec un compresseur (11) pour la compression de l'air de combustion, au moins une chambre de combustion (13, 15), dans laquelle un combustible est brûlé avec apport d'air de combustion comprimé, et au moins une première turbine (14, 16) installée à la suite de la chambre de combustion (13, 15) et dans laquelle les gaz de combustion chauds provenant de la chambre de combustion (13, 15) sont détendus en produisant un travail, dans laquelle une partie de l'air de combustion comprimé est déviée, refroidie dans un refroidisseur d'air de refroidissement (18), portée à une pression d'air de refroidissement plus basse par des moyens de réduction de pression (21) et envoyée à la turbine à gaz (20, 30) en vue du refroidissement, lesquels comprennent une deuxième turbine (21) qui peut être commandée, **caractérisée en ce qu'**il est prévu un dispositif de régulation (23), qui régule la pression de l'air de refroidissement par le biais de la commande de la deuxième turbine (21).

2. Turbine à gaz selon la revendication 1, **caractérisée en ce que** la deuxième turbine (21) est disposée avant le refroidisseur d'air de refroidissement (18).

3. Turbine à gaz selon la revendication 1 ou 2, **caractérisée en ce que** la deuxième turbine (21) entraîne un générateur (22).

4. Turbine à gaz selon l'une quelconque des revendications 1 à 3, **caractérisée en ce** l'on utilise un gaz comme combustible, et en ce que la deuxième turbine (21) entraîne un compresseur de gaz (24) pour la compression du combustible.

5. Turbine à gaz selon l'une quelconque des revendications 1 à 4, **caractérisée en ce que** la deuxième turbine (21) entraîne un dispositif de préchauffage de combustible (26), dans lequel le combustible est chauffé par conversion d'énergie cinétique en chaleur.

6. Turbine à gaz selon la revendication 5, **caractérisée en ce que** le combustible est un combustible liquide.

7. Turbine à gaz selon l'une quelconque des revendications 1 à 6, **caractérisée en ce que** la turbine à gaz (20, 30) est équipée d'une combustion à deux étages, et comprend deux chambres de combustion (13, 15) et une troisième turbine (16, 14).
